# EUROPEAN PATENT APPLICATION

(11) **EP 2 613 256 A2**
(43) Date of publication of application: **10.07.2013**
(21) Application number: 12198808.3
(22) Date of filing: 21.12.2012
(51) Int. Cl.: G06F 9/445, G06Q 20/00

(54) **Retail peripherals management system**

(30) Priority: 07.01.2012 IN MU00642012
(71) Applicant: Tata Consultancy Services Limited, Maharashtra (IN)
(72) Inventor: Dash, Sandeep, 751 024 Orissa (IN); Shanmugam, Saravanan Makathai, 751 024 Orissa (IN)
(74) Representative: Meissner, Bolte & Partner

(57) **Abstract**

A method and a system for maintaining a retail terminal (104) having a plurality of peripherals (272) are provided. The method comprises determining at least one of an operating quality and a maintenance need of the plurality of peripherals (272). The method further comprises facilitating remediation of at least one peripheral of the plurality of peripherals (272) based upon the operating quality and the maintenance need of the plurality of peripherals (272).

## Description

### TECHNICAL FIELD

The present subject matter described herein, in general, relates to retail terminals, and more particularly to maintaining retail terminals having a plurality of peripherals.

### BACKGROUND

The advent of technology has seen a rise in the usage of interactive communication devices, such as handheld or mobile computing or communication devices or kiosks or retail terminals, collectively referred to as devices, which are configured to communicate with a computer network or system. These devices are usually used in various places, such as shopping centre, retail stores and malls, for varied purposes, such as for tracking inventory, processing customer and product information in retail environments, etc. In one example, the retail industry uses such devices for customer interaction. Examples of devices may include kiosks or retail terminals. Each of these retail terminals is typically configured to communicate with a central or host server and to control or operate a number of peripherals. For example, a retail terminal may have attached peripherals, such as a magnetic strip or card reader, a touch screen, a keyboard or keypad, a mouse, a bar a code scanner, and a printer.

With the increase in the number and variety of retail terminals and the associated peripherals, there has been an increase of costs, in terms of IT support and associated software tools, involved in supporting and maintaining the varied types of peripherals. To address the above issue, the National Retail Foundation defined a generic framework, known as UnifiedPoS, to standardize the Application Programming Interfaces (APIs) for supporting the events generated by the peripherals. However, the adoption of the UnifiedPoS is limited as many manufacturers of peripherals do not comply with the same.

### SUMMARY

This summary is provided to introduce concepts related to systems and methods for maintaining a plurality retail terminals, each having a plurality of peripherals, of an enterprise and the concepts are further described below in the detailed description. This summary is not intended to identify essential features of the claimed subject matter nor is it intended for use in determining or limiting the scope of the claimed subject matter.

In one implementation, a method for maintaining a retail terminal having a plurality of peripherals is provided. The method comprises determining at least one of an operating quality and a maintenance need of the plurality of peripherals. The method further comprises facilitating remediation of at least one peripheral of the plurality of peripherals based upon the operating quality and the maintenance need of the plurality of peripherals.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network implementation 100 of a Retail Peripherals Management System (RPMS) for maintaining retail terminals of an enterprise, in accordance with an embodiment of the present subject matter.

Figure 2 illustrates a block diagram representation of the RPMS and the retail terminal of Figure 1, in accordance with an embodiment of the present subject matter.

Figure 3 shows a flowchart illustrating a method for maintaining a retail terminal in an enterprise, in accordance with an embodiment of the present subject matter.

Figure 4 shows a flowchart illustrating a method for maintaining a plurality of retail terminals in an enterprise, in accordance with an embodiment of the present subject matter.

### DETAILED DESCRIPTION

Systems and methods for maintaining retail terminals are described herein. The retail terminals may be used at a variety of places, such as a retail house, a restaurant, a café, a petrol pump, money exchangers, and the like. In one example, the retail terminals may be used for cash changing, cash drawing, Forex, coin dispensing, biometrics identification, motion sensing, completing a sale transaction, and for other purposes supported by a POS standard such as UnifiedPoS as known in the art. In one example, the retail terminals may be installed in a retail house, such as Wal-Mart™, for managing sale of products and inventory in the retail house. A retail terminal may have a plurality of peripherals, such as a printer, a Universal Product Code (UPC) scanner, an input/output modality, a card swiping terminal, and the like. In the present example, the plurality of peripherals (hereinafter interchangeably referred to as 'the peripherals') may be used to complete a sale transaction. For example, if a customer is buying an item in a retail house, then the UPC scanner may be used to scan a barcode present on the item, the input modality, such as a keyboard may be used to input details of the item, the output modality, such as a display screen may be used to display item details and a number of similar items remaining in an inventory, the card swiping terminal may be used to accept payment from a credit card or a debit card of the customer, and the printer may be used to print a bill of the item. Therefore, as discussed above, the retail terminal may be used to complete a sale transaction.

As the peripherals are continuously used in an enterprise for making sale transactions, each of the peripherals of each of the retail terminals needs to be checked regularly in order to avoid delays in the sale transactions. In one example, both hardware and software of each of the peripherals of each of the retail terminals are checked for malfunctioning and upgradation. Manual checking of a large number of retail terminals may not be feasible. Therefore, the present subject matter provides a method and a system for automatically checking an operating quality and determining a maintenance need of the plurality of peripherals. Specifically, the peripherals of the retail terminals of an enterprise may be quality checked periodically by running one or more maintenance sequence requests. Based upon the operating quality and the maintenance need of the peripherals, one or more peripherals may be replaced or upgraded. Specifically, the maintenance sequence requests may include performing a set of predefined tests on the peripherals thereby determining a malfunction or a required update in the peripherals. If a peripheral is found to be malfunctioning or requiring an update, a correction step may be initiated accordingly. Simultaneously, certain stakeholders associated with a malfunctioning peripheral or a peripheral requiring an update may be alerted.

Further, in one implementation, a plurality of metrics may be generated for each of the retail terminals. Specifically, the metrics may capture information related to the operating quality, usage, and maintenance need of the peripherals in a retail terminal. The metrics may be converted to audit trail records which may be used for auditing the peripherals. As mentioned above, metrics may be generated for each of the plurality of retail terminals and may be collated to understand working of each of the retail terminals. Based upon the collated metrics, maintenance requests may be initiated for specific peripherals of specific retail terminals. The maintenance requests may include replacement and/or upgradation of a peripheral. In the present implementation, maintenance requests may also be initiated based upon a user input. Therefore, the methods and systems disclosed herein help in maintaining retail terminals of an enterprise by continuously monitoring working of peripherals of retail terminals and by initiating requests to resolve malfunctions and upgradation requirements of peripherals.

While aspects of described system and method for maintaining retail terminals of an enterprise may be implemented in any number of different computing systems, environments, and/or configurations, the embodiments are described in the context of the following exemplary system.

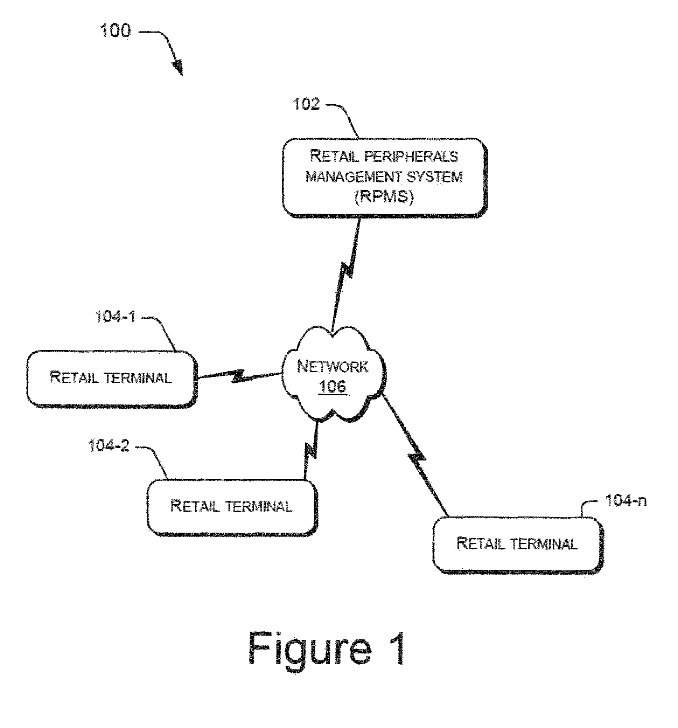

Referring now to Figure 1, a network implementation 100 of a Retail Peripherals Management System (RPMS) 102 for maintaining retail terminals 104 of an enterprise is illustrated, in accordance with an embodiment of the present subject matter. Further, the RPMS 102 may be implemented in a variety of computing systems, such as a laptop computer, a desktop computer, a notebook, a workstation, a mainframe computer, a server, a network server, and the like. It will be understood that the RPMS 102 may be communicatively coupled to the retail terminals 104-1, 104-2,...104-N, collectively referred to as retail terminals 104 hereinafter. The retail terminals 104 may be implemented in devices, such as a portable computer, a personal digital assistant, a handheld device, and a workstation. In one implementation, the network implementation 100 is compliant with UnifiedPoS such as via compliance with JavaPoS. The retail terminals 104 are communicatively coupled to the RPMS 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

In one implementation, the retail terminals 104, as known, may be used at a variety of places, such as a retail house, a restaurant, a café, a petrol pump, money exchangers, and the like. In one example, the retail terminals may be used for cash changing, cash drawing, coin dispensing, biometrics identification, motion sensing, completing a sale transaction, and for other purposes supported by the UnifiedPoS. In one example, the retail terminals may be installed in a retail house, such as Wal-Mart^{™}, for managing sale of products and inventory in the retail house. Although, the present subject matter is explained considering the retail terminal to be a Point of Sale terminal at a retail house, it may be understood that the retail terminal may be used for any other purpose supported by the UnifiedPoS.

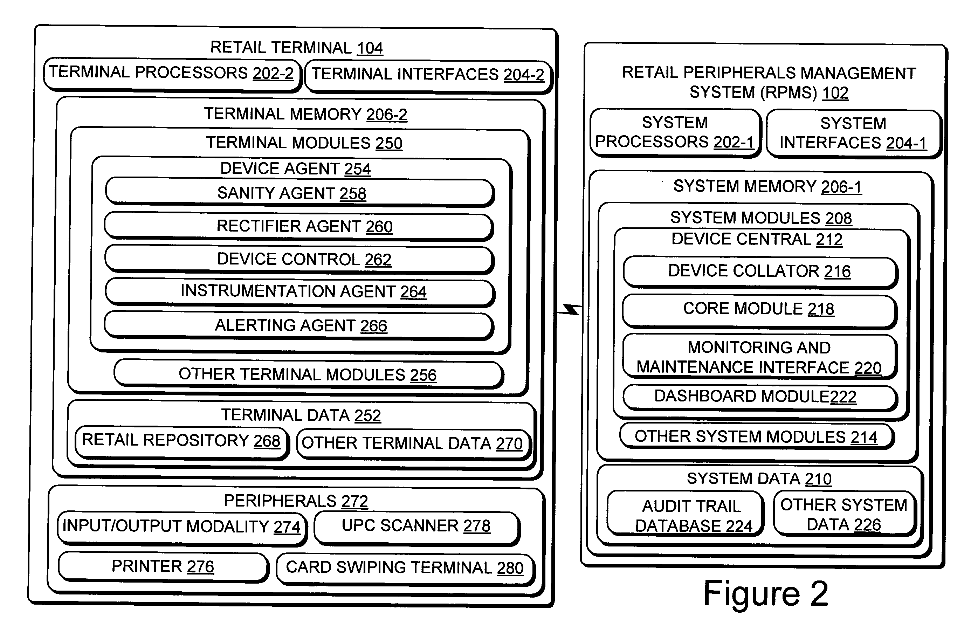

In the present example, each retail terminal 104 has several peripherals which are used to complete a sale transaction as will be explained in Figure 2. In an enterprise, there may be a large number of retail terminals 104 each having a plurality of peripherals (hereinafter interchangeably referred to as 'the peripherals'). In order to maintain the retail terminals 104 of the enterprise, the RPMS 102 may be used. Specifically, the RPMS 102 monitors working of the retail terminals 104 and initiates corrective actions when one or more retail terminals 104 are malfunctioning or need upgradation. Further, the RPMS 102 ensures that a maintenance schedule is followed and all peripherals of all retail terminals 104 are quality checked periodically, thereby improving quality of service in the enterprise. In case one or more peripherals of one or more retail terminals 104 are malfunctioning or need upgradation or replacement, appropriate alerts may be generated by the RPMS 102 so that corrective action may be taken immediately.

Referring now to Figure 2, a block diagram representation of the RPMS 102 and the retail terminal 104 is shown, in accordance with an embodiment of the present subject matter. The RPMS 102 and the retail terminal 104 as discussed previously may be implemented as various types of computing systems and or communication devices. In one implementation, the RPMS 102 and the retail terminal 104 include a system processor 202-1 and a terminal processor 202-2, respectively. The system processor 202-1 and the terminal processor 202-2 may be collectively referred to as the processor 202.

The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in a memory.

Also, the RPMS 102 and the retail terminal 104 include a system I/O interface 204-1 and a terminal I/O interface 204-2, respectively, which is collectively referred to as I/O interfaces 204. The I/O interface 204 may include a variety of software and hardware interfaces, for example, a web interface, a graphical user interface, and the like. The I/O interface 204 may allow the RPMS 102 to interact with a user directly or through the retail terminal 104. Further, the I/O interface 204 may enable the RPMS 102 to communicate with other computing devices, such as web servers, external data servers and remote monitoring and/or maintenance servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The RPMS 102 and the retail terminal 104 may further include one or more memory components, referred to as a system memory 206-1 and a terminal memory 206-2, coupled to the system processor 202-1 and the terminal processor 202-2, respectively. The system memory 206-1 and the terminal memory 206-2 are collectively referred to memory 206. The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In one embodiment, the system memory 206-1 includes system modules 208 and system data 210. The system modules 208 may include a device central 212 and other system modules 214. The device central 212 includes a device collator 216, a core module 218, a Monitoring and Maintenance Interface (MMI) 220, and a dashboard module 222. The system modules 208 include routines, programs, objects, components, data structures, etc., which perform particular tasks or implement particular abstract data types. The other system modules 214 may include programs or coded instructions that supplement applications and functions of the RPMS 102.

The system data 210, amongst other things, serves as a repository for storing data processed, received, and generated by one or more of the system modules 208. The system data 210 may include an audit trail database 224 and other system data 226. The other system data 226 may include data generated as a result of the execution of one or more modules in the other system modules 214.

In one embodiment, the terminal memory 206-2 includes terminal modules 250 and terminal data 252. The terminal modules 250 may include a device agent 254 and other terminal modules 256. The device agent 254 includes a sanity agent 258, a rectifier agent 260, a device control 262, an instrumentation agent 264, and an alerting anent 266. The terminal modules 250 include routines, programs, objects, components, data structures, etc., which perform particular tasks or implement particular abstract data types. The other terminal modules 256 may include programs or coded instructions that supplement applications and functions of the retail terminal 104.

The terminal data 252, amongst other things, serves as a repository for storing data processed, received, and generated by one or more of the terminal modules 250. The terminal data 252 may include a retail repository 268 and other terminal data 270. The other terminal data 270 may include data generated as a result of the execution of one or more modules in the other terminal modules 256.

In the present implementation, the retail terminal 104 may also include a plurality of peripherals 272, such as an input/output modality 274, a printer 276, a Universal Product Code (UPC) scanner 278, and a card swiping terminal 280. However, as will be understood, in other implementations, one or more of the peripherals 272 may be external to and operatively connected to the retail terminal 104.

As mentioned above, in one example, the retail terminal 104 may be used to complete a sale transaction in an enterprise. The enterprise may be a petrol pump in the present example. A customer may wish to buy petrol and an item from a store at the petrol pump. Subsequently, the customer may go to the retail terminal 104 installed at the petrol pump for making a payment for the items selected. At the retail terminal 104, the card swiping terminal 280 may be used to accept payment from a debit card or a credit card of the customer, the printer 276 may print a bill for the items, the UPC scanner 278 may be used to scan a bar code of the item, the input/output modality 274 such as a touch screen may display item details and may also be used to input item details. The input/output modality 274 may also display inventory details of the item along with an item code. Therefore, it may be understood that the retail terminals 104 facilitate completion of the sale transactions at an enterprise.

It may be understood that the retail terminals 104 generally remain operational throughout the day due to a large number of customers who come to shop at these enterprises. Any malfunction in any of the retail terminals 104 may affect a quality of service of the enterprise. Therefore, in order to proactively detect possible malfunctions in the retail terminals 104, a device agent 254 is installed in each of the retail terminals 104. The device agent 254 proactively detects and corrects possible malfunctions in a retail terminal 104 to the extent supported by a specific revision of JavaPoS or OPOS on Microsoft Windows4® implemented by the peripherals 272. As the device agent 254 is installed in the retail terminal 104, a possible disconnect of the retail terminal 104 with the network 106 may not affect detection and correction of malfunctions of the peripherals 272 of the retail terminal 104. In the present subject matter, the retail terminal 104 and the peripherals 272 are JavaPoS complaint.

In one implementation, the device agent 254 includes the sanity agent 258, which may periodically determine an operating quality and maintenance need of the peripherals 272 of the retail terminal 104. Specifically, the sanity agent 258 may receive a command from the device central 212 to execute a maintenance sequence request on the peripherals 272 of the retail terminal 104 in order to determine the operating quality and the maintenance need of the peripherals 272. The maintenance sequence request includes a set of predetermined tests which may be performed on the peripherals 272 to determine the operating quality and maintenance need.

In one example, performing the set of predetermined tests may include taking a test print, performing a test scan, and performing other standard tests on the peripherals 272 of a retail terminal. If any peripheral Y fails any test of the set of predetermined tests, then it may be inferred that the peripheral Y is malfunctioning. After it is determined that the peripheral Y is malfunctioning, the peripheral Y may either be replaced or upgraded with software or hardware. In one example, a peripheral may need upgradation when the peripheral is no longer compatible. Therefore, based upon the results of the set of predetermined tests on the peripherals 272, the operating quality and maintenance need of the peripherals 272 of a retail terminal 104 may be determined. In the present implementation, the sanity agent 258 may also determine scheduled upgradations being required by one or more peripherals 272. The scheduled upgradations indicate a type and a date of upgradation required by a peripheral.

Based upon the operating quality and maintenance need of the peripherals 272 of a retail terminal, the rectifier agent 260 may facilitate remediation of one or more peripherals 272. For example, if it is found during the execution of maintenance sequence requests that the operating quality of a printer Y of a retail terminal X is not up to the mark; or that the printer Y is malfunctioning; or that the printer Y needs upgradation; then the rectifier agent 260 of the retail terminal X may enable quick replacement of the printer Y with a new printer or may fetch an application for upgrading the printer Y or may provide instructions to an employee of the enterprise to take a corrective action. If the printer Y needs to be replaced, then the rectifier agent 260 enables replacement without shutting down the retail terminal X. Replacement of printer Y with printer Y1 is possible without shutting down the retail terminal X, however, such a replacement is usually constrained by a fact that a replacement driver for the printer Y1 is already installed in the retail terminal X. In order to do this, the replacement driver is first downloaded and deployed by the rectifier agent 260. Subsequently, the rectifier agent 260 may instantiate the device control 262 to install the replacement driver in the retail terminal X. After the replacement driver is installed in the retail terminal X, the printer Y may be replaced with printer Y1 without shutting down the retail terminal X. In the present implementation, the rectifier agent 260 also co-ordinates with the sanity agent 258 to run a maintenance sequence request, such as checking a cartridge state on the printer Y1.

However, if the printer Y needs an upgradation, then the rectifier agent 260 may fetch the application, such as a software application from the Internet or from an associated server and may save the application in the retail repository 268. The application saved in the retail repository 268 may be installed in the printer Y by the device control 262. The application may be used for remediating and updating the printer Y. In another implementation, the printer Y may need a hardware upgradation. In this implementation, the alerting agent 266 may generate an alert for a stakeholder, such as a maintenance personal associated with the printer Y.

Further based upon the operating quality, a usage, and the maintenance need of peripherals 272 of a retail terminal, one or more metrics may be gathered and/or generated by the instrumentation agent 264. Specifically, the instrumentation agent 264 may generate metrics which may include performance parameters indicating a performance level, usage details, and scheduled upgradations of the peripherals 272 of a retail terminal. The metrics may indicate an overall health and requirements of the peripherals 272 of a retail terminal. In one implementation, the metrics may be used to create a maintenance schedule for a retail terminal. For example, if a metric of a retail terminal Z indicates that the overall health of the retail terminal Z is poor due to obsolete peripherals, then a maintenance schedule suggesting frequent quality checks may be created for the retail terminal Z. In one example, the metrics may also include firmware revision data that may be compared with a remote repository's firmware revision data for a given device, to understand if a newer version of the device is available.

In the present implementation, the instrumentation agent 264 may convert the metrics into an audit trail record. The audit trail record may include time stamping information in addition to the information present in the metrics. In one example, the audit trail record of a retail terminal X may include a time and date of execution of maintenance sequence requests on the retail terminal X, a result of the set of predetermined tests, complete usage details of the retail terminal X, maintenance needs, and other information associated with the retail terminal X. After the audit trail record is generated, the instrumentation agent 264 may send the audit trail record to the device central 212 on a real time basis or a near real time basis. The audit trail record may be used to take corrective actions against any possible malfunctioning of the peripherals 272 of the retail terminal X.

In the present example, based upon the metrics generated for the retail terminal X, the alerting agent 266 may generate an alert. For example, if the metrics indicate that a UPC scanner of a retail terminal X needs an update or is malfunctioning, then the alerting agent 266 may alert a stakeholder, such as a maintenance personal associated with the retail terminal X.

In one implementation, each device agent 254 sends the audit trail records to the device central 212 as and when the audit trail records are generated in near-real time mode in order to reduce load on the retail terminal 104 and the network 106. Specifically, the device collator 216, present in the device central 212, is configured to collate the audit trail records of all the retail terminals 104 of an enterprise. The device collator 216 maintain a consolidated view of the audit trails of the retail terminals 104 of an enterprise. As mentioned above, the audit trail records are associated with operating quality, usage, and maintenance need of the plurality of peripherals 272 of the retail terminals 104. In one implementation, the device collator 216 may define alert thresholds based upon the audit trail records. For example, if a peripheral fails 20% tests of the set of predetermined tests, an alert may be generated. In one implementation, the metrics collated by the device collator 216 are downloaded by the device agents 254 periodically and are made effective based on an effective from date present on the metrics. The effective from date indicates a date on which the metrics become effective.

In one implementation, the audit trail records, stored in the audit trail database 224, may be used by the core module 218 to initiate one or more requests, such as a maintenance sequence request, an info mining request, an upgradation execution request, and an alert generation request. The one or more requests may be initiated using the dashboard module 222 based upon at least one of audit trail records and user input on the system interface 204-1. For example, the audit trail record of a retail terminal X may indicate a scheduled upgradation of a printer Y of the retail terminal X. Based upon this indication, the printer Y may be upgraded either automatically at a scheduled time or upon a user input. In another example, the audit trail record of the retail terminal X may be used to gather information about a particular peripheral, such as a UPC scanner Y of the retail terminal X. In order to gather information about the UPC scanner Y, the core module 218 may initiate info mining request targeting the UPC scanner Y based upon a user input. Specifically, the user may wish to see the operating quality or maintenance need of the UPC scanner Y and may therefore input info mining request on the system interface 204-1 coupled to the core module 218 which may initiate the said info mining request.

In another example, the audit trail record of the retail terminal X may be used to generate an alert when one or more peripherals 272 of the retail terminal X are malfunctioning or need immediate upgradations or replacements. In one implementation, the alert may be initiated by the dashboard module 222 based upon an input on the system interface 204-1 coupled to the dashboard module 222. However, in another embodiment, the alert may be generated by an alarm unit (not shown). Therefore, it may be understood that the core module 218 may initiate the one or more requests based upon the audit trail records or upon user inputs. Further, in the present embodiment, the dashboard module 222 may be used to summarize audit trail records on the system interface 204-1 of all the retail terminals 104 of an enterprise and may also be used to maintain the retail terminals 104 remotely.

In the present implementation, the Monitoring and Maintenance Interface (MMI) 220 may communicate the one or more requests between the core module 218 and the device collator 216. Subsequently, the device collator 216 may transfer the one or more requests to the retail terminals 104 for execution. In one implementation, the MMI 220 may also act an interface gateway between remote monitoring and maintenance applications such as, Out Of The Box (OOTB) and the core module 218. The MMI 220 may use industry standard integration protocols, such as Java Management Extensions (JMX) and Simple Object Access Protocol (SOAP), for the interfacing.

Therefore, the present subject matter provides the RPMS 102 and method for maintaining service quality and peripherals quality in an enterprise. Further, upgradation and scheduled maintenance is performed automatically, thereby avoiding a need to outsource maintenance of the peripherals 272. Furthermore, the plurality of retail terminals 104 may be monitored and maintained remotely and proactively. Furthermore, metrics and audit trail records are generated to understand overall health of peripherals 272. Therefore, it may be understood that the RPMS 102 addresses concerns related to device sanity, status instrumentation, event audit-trail, remote monitoring and maintenance and also supports industry standard protocols, such as the UnifiedPoS to be able to port the RPMS 102 across wide range of applications.

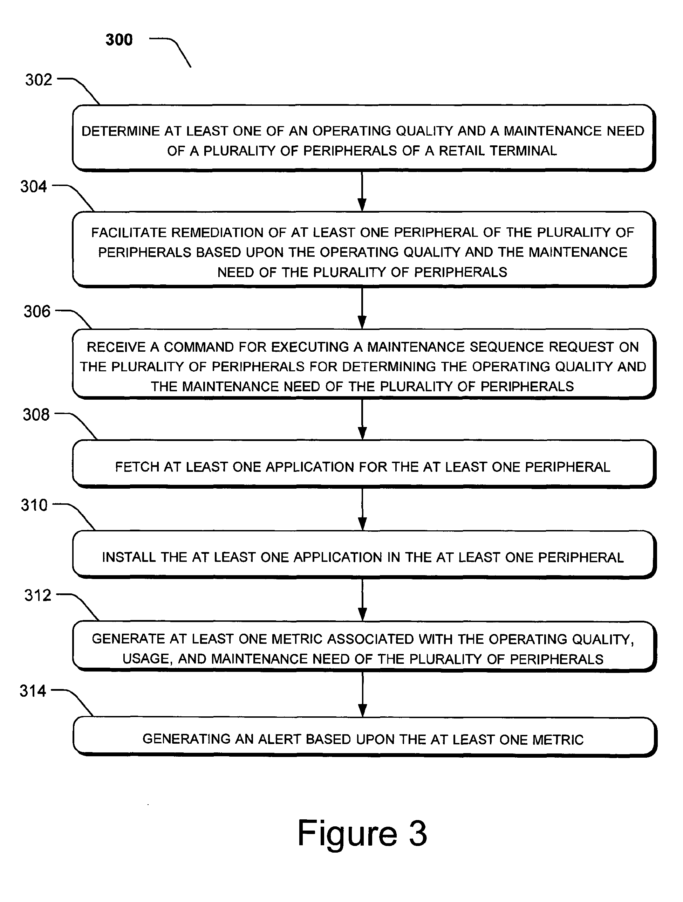

Referring now to Figure 3, a method 300 for maintaining a retail terminal 104 having a plurality of peripherals 272 is shown, in accordance with an embodiment of the present subject matter. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method can be implemented in any suitable hardware, software, firmware, or combination thereof. However, for ease of explanation, in the embodiments described below, the method 300 may be considered to be implemented in the above described retail terminal 104.

At block 302, at least one of an operating quality and a maintenance need of the plurality of peripherals 272 are determined. In one example, the operating quality and the maintenance need is determined by the sanity agent 258.

At block 304, remediation of at least one peripheral of the plurality of peripherals 272 is facilitated based upon the operating quality and the maintenance need of the plurality of peripherals 272. In one example, the remediation is facilitated by the rectifier agent 260.

At block 306, a command is received for executing a maintenance sequence request on the plurality of peripherals 272 for determining the operating quality and the maintenance need of the plurality of peripherals 272. In one example, the command is received by the sanity agent 258.

At block 308, at least one application for the at least one peripheral 272 is fetched. The at least one application is fetched based upon the operating quality and maintenance need of the plurality of peripherals 272. In one example, the at least one application is fetched by the rectifier agent 260.

At block 310, the at least one application is installed in the at least one peripheral 272. The at least one application is used for at least one of remediating and updating the at least one peripheral 272. In one example, the at least one application is installed by the device control 262.

At block 312, at least one metric associated with the operating quality, usage, and maintenance need of the plurality of peripherals is generated. In one example, the at least one metric is generated by the instrumentation agent 264.

At block 314, an alert is generated based upon the at least one metric. In one example, the alert is generated by the alerting agent 266.

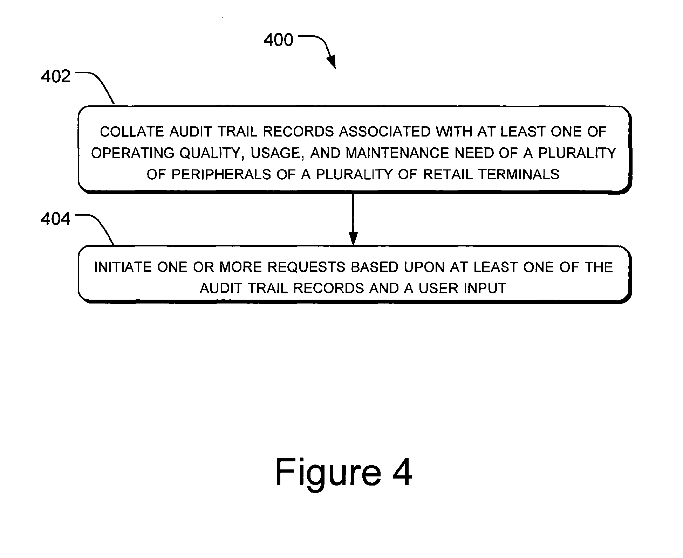

Referring now to Figure 4, a method 400 for maintaining a plurality retail terminals 104 is shown, in accordance with an embodiment of the present subject matter. In the embodiments described below, the method 400 may be considered to be implemented in the above described RPMS 102.

At block 402, audit trail records associated with at least one of operating quality, usage, and maintenance need of the plurality of peripherals 272 of the plurality of retail terminals 104 may be collated. In one example, the audit trail records may be collated by the device collator 216.

At block 404, one or more requests based upon at least one of the audit trail records and a user input may be initiated. In one example, the one or more requests may be initiated by the core module 218.

Although implementations for methods and systems for maintaining retail terminals 104 of an enterprise have been described in language specific to structural features and/or methods, it is to be understood that the appended claims are not necessarily limited to the specific features or methods described. Rather, the specific features and methods are disclosed as examples of implementations for maintaining retail terminals 104 of an enterprise.

## Claims

1. A retail terminal (104) having a plurality of peripherals (272), the retail terminal (104) comprising:
a terminal processor (202-2); and
a terminal memory (206-2) coupled to the terminal processor (202-2), wherein the terminal memory (206-2) comprises a device agent (254) comprising
a sanity agent (258) configured to determine at least one of an operating quality and a maintenance need of the plurality of peripherals (272);
and
a rectifier agent (260) configured to facilitate remediation of at least one peripheral of the plurality of peripherals (272) based upon the operating quality and the maintenance need of the plurality of peripherals (272).

2. The retail terminal (104) of claim 1, wherein the sanity agent (258) receives a command from a device central (212) to execute a maintenance sequence request on the plurality of peripherals (272) for determining the operating quality and the maintenance need of the plurality of peripherals (272), and wherein the device central (212) is coupled to the retail terminal (104).

3. The retail terminal (104) of claim 1, wherein the rectifier agent (260) is configured to fetch at least one application for the at least one peripheral; and
facilitate replacement of the at least one peripheral with a new peripheral, based upon the operating quality and the maintenance need of the at least one peripheral of the plurality of peripherals (272), and wherein the rectifier agent (260) stores the at least one application into a retail repository (268).

4. The retail terminal (104) of claim 3, further comprising a device control (262) configured to install the at least one application fetched by the rectifier agent (260) in the at least one peripheral, wherein the at least one application is used for at least one of remediating and updating the at least one peripheral.

5. The retail terminal (104) of claim 1, further comprising an instrumentation agent (264) for generating at least one metric associated with the operating quality, usage, and maintenance need of the plurality of peripherals (272), wherein the instrumentation agent (264) sends the at least one metric as an audit trail record to a device central (212) coupled to the retail terminal (104).

6. The retail terminal (104) of claim 5, further comprising an alerting agent (266) for generating an alert based upon the at least one metric.

7. A Retail Peripherals Management System (RPMS) (102) for maintaining a plurality of retail terminals (104) each having a plurality of peripherals (272), the RPMS (102) comprising:
a system processor (202-1); and
a system memory (206-1) coupled to the system processor (202-1), the system memory (206-1) comprising a device central (212) comprising at least one of
a device collator (216) configured to collate audit trail records associated with at least one of operating quality, usage, and maintenance need of the plurality of peripherals (272) of the plurality of retail terminals (104);
and
a core module (218) configured to initiate one or more requests based upon at least one of the audit trail records and a user input.

8. The RPMS (102) of claim 7, wherein the one or more requests comprises at least one of a maintenance sequence request, an info mining request, upgradation execution, and alert generation.

9. The RPMS (102) of claim 7, further comprising a Monitoring and Maintenance Interface (MMI) (220) for communicating one or more requests between the core module (218) and the device collator (216), wherein the device collator (216) sends the one or more requests to at least one of the plurality of the retail terminals (104).

10. The RPMS (102) of claim 7, further comprising an audit trail database (224) capable of storing the audit trail records.

11. A method for maintaining a retail terminal (104) having a plurality of peripherals (272), the method comprising:
determining at least one of an operating quality and a maintenance need of the plurality of peripherals (272); and
facilitating remediation of at least one peripheral of the plurality of peripherals (272) based upon the operating quality and the maintenance need of the plurality of peripherals (272).

12. The method of claim 11, further comprising receiving a command for executing a maintenance sequence request on the plurality of peripherals (272) for determining the operating quality and the maintenance need of the plurality of peripherals (272).

13. The method of claim 11, wherein facilitating comprising
fetching at least one application for the at least one peripheral; and
facilitating replacement of the at least one peripheral with a new peripheral, based upon the operating quality and the maintenance need of the at least one peripheral of the plurality of peripherals (272).

14. The method of claim 13, further comprising installing the at least one application in the at least one peripheral, wherein the at least one application is used for at least one of remediating and updating the at least one peripheral.

15. The method of claim 11, further comprising generating at least one metric associated with the operating quality, usage, and maintenance need of the plurality of peripherals (272).

16. The method of claim 15, further comprising generating an alert based upon the at least one metric.

17. A method for maintaining a plurality of retail terminals (104) each having a plurality of peripherals (272), the method comprising:
collating audit trail records associated with at least one of operating quality, usage, and maintenance need of the plurality of peripherals (272) of the plurality of retail terminals (104); and
initiating one or more requests based upon at least one of the audit trail records and a user input.

18. The method of claim 17, wherein the one or more requests comprises at least one of a maintenance sequence request, an info mining request, upgradation execution, and alert generation.

19. A computer-readable medium having embodied thereon a computer program for executing a method for maintaining a retail terminal (104) having a plurality of peripherals (272), the method comprising:
determining at least one of an operating quality and a maintenance need of the plurality of peripherals (272); and
facilitating remediation of at least one peripheral of the plurality of peripherals (272) based upon the operating quality and the maintenance need of the plurality of peripherals (272).
